# EUROPEAN PATENT APPLICATION

(11) **EP 4 792 697 A2**
(43) Date of publication of application: **19.08.2026**
(21) Application number: 26155974.4
(22) Date of filing: 03.02.2026
(51) Int. Cl.: A47J 42/18

(54) **BLADE ADJUSTING DEVICE FOR BEAN GRINDER AND BEAN GRINDER THEREOF**

(30) Priority: 18.02.2025 CN 202510174396
(71) Applicant: Guangdong Gemilai Intelligent Technology Co., Ltd., Foshan, Guangdong 528300 (CN)
(72) Inventor: Xu, Biao, Foshan City, Guangdong Province, 528300 (CN); Zhu, Wenjing, Foshan City, Guangdong Province, 528300 (CN); Xie, Jianping, Foshan City, Guangdong Province, 528300 (CN); Chen, Zhengxin, Foshan City, Guangdong Province, 528300 (CN)
(74) Representative: Lin Chien, Mon-Yin

(57) **Abstract**

The present disclosure relates to a blade adjusting device for a bean grinder and a bean grinder thereof. The blade adjusting device comprises a bean grinding support (1), inside which a lower blade disc assembly and an upper blade disc assembly adapted to the lower blade disc assembly are installed; and an adjusting component (7) in threaded connection fit with the upper blade disc assembly. The adjusting component (7) is rotatable to drive the upper blade disc assembly to move axially, thereby adjusting the distance between the upper blade disc (6) and the lower blade disc (3). On the thread structure of one side of the adjusting component (7) and/or the upper blade disc assembly at the threaded connection fit, multiple interruption areas are provided. As the internal and external screw threads rotate relative to each other, the screw threads scrape off and expel powder and impurities from the exterior of the thread structure.

## Description

### TECHNICAL FIELD

The present disclosure relates to the technical field of bean processing, and particularly to a blade adjusting device for a bean grinder and a bean grinder thereof.

### BACKGROUND

Existing household and commercial bean grinders and grinding integrated machines on the market generally use 1-3 or more springs to support the upper blade disc assembly in their upper blade disc adjustment systems. The spacing between the upper blade disc assembly and the fixed blade disc is adjusted and fixed by rotating the internal and external screw threads between the upper blade disc assembly and the adjusting component, thereby controlling the coarseness of the ground powder. However, this system has the following significant drawbacks: 1. Difficult adjustment and poor user experience: due to the action and reaction forces of the springs, users often find it hard to rotate the scale dial when adjusting the grinding coarseness, resulting in an extremely poor operation experience. This design not only increases user difficulty but may also reduce user satisfaction with the product. 2. High cleaning difficulty and susceptibility to jamming: when cleaning the blade discs, dust or impurities can easily fall onto the rotating screw threads. Due to the complexity of the screw thread structure, these dust particles or impurities are extremely difficult to clean. Over time, these impurities may cause the screw threads to jam, rendering the machine inoperable and unusable.

### SUMMARY

To overcome the defects of the prior art, the present disclosure proposes a blade adjusting device for a bean grinder, which can solve the aforementioned problems of difficult rotational adjustment and screw threads prone to jamming in bean grinders.

To achieve this object, the present disclosure adopts the following technical solution:
The present disclosure provides a blade adjusting device for a bean grinder, including a bean grinding support. A lower blade disc assembly and an upper blade disc assembly adapted to the lower blade disc assembly are installed inside the bean grinding support. The blade adjusting device further includes an adjusting component. The adjusting component forms a threaded connection fit with the upper blade disc assembly, and the adjusting component is rotatable to drive the upper blade disc assembly to move axially, thereby adjusting a distance between an upper blade disc of the upper blade disc assembly and a lower blade disc of the lower blade disc assembly. A plurality of interruption areas are provided on a thread structure on a side of the upper blade disc assembly at the threaded connection fit, the interruption areas are connected to external upper and lower sides of the thread structure, forming cleaning channels, and when the adjusting component is rotated to axially move the upper blade disc assembly, a relative rotation of internal and external screw threads within the thread structure causes powder and impurities inside the thread structure to be scrape by the screw threads to a location of the interruption areas and then fall out of the thread structure through the cleaning channels.

In a preferred technical solution of the present disclosure, a plurality of lugs are provided on the bean grinding support or the lower blade disc assembly, an external thread is formed at an outer edge of the upper blade disc assembly, and grooves adapted to the lugs is further formed at the outer edge of the upper blade disc assembly to interrupt the external thread; the adjusting component is threadedly connected to the external thread of the upper blade disc assembly, and the adjusting component is operable to drive the upper blade disc assembly to move axially, thereby adjusting the distance between the upper blade disc of the upper blade disc assembly and the lower blade disc of the lower blade disc assembly.

In a preferred technical solution of the present disclosure, the lugs are centrally symmetrically distributed on the bean grinding support, and the grooves adapted to the lugs are correspondingly centrally symmetrically distributed.

In a preferred technical solution of the present disclosure, the lugs are arc-shaped.

In a preferred technical solution of the present disclosure, the upper blade disc assembly includes an adjusting disc, an upper retaining support, and an upper blade disc; the external thread is formed at an outer edge of the adjusting disc, the upper retaining support is installed within the bean grinding support, the upper blade disc is fixedly connected to the upper retaining support, and the upper retaining support is fixedly connected to the adjusting disc.

In a preferred technical solution of the present disclosure, the lower blade disc assembly includes a lower retaining support and a lower blade disc; the lower retaining support is installed within the bean grinding support, and the lower blade disc is fixedly connected to the lower retaining support.

In a preferred technical solution of the present disclosure, the blade adjusting device further includes a retaining base that is engaged with the upper blade disc assembly.

In a preferred technical solution of the present disclosure, the blade adjusting device further includes a handle installed on the upper blade disc assembly.

In a preferred technical solution of the present disclosure, a scale for indicating a coarseness of ground beans is provided on an exterior of the adjusting component.

The present disclosure provides a bean grinder including the blade adjusting device of the above technical solution.

### Beneficial effects of the present disclosure:

The present disclosure proposes a blade adjusting device for a bean grinder and the bean grinder thereof. This blade adjusting device eliminates the original spring structure and instead uses a threaded connection between the adjusting component and the external thread of the upper blade disc assembly. The adjusting component is operable to drive the upper blade disc assembly to move axially, thereby adjusting the distance between the upper blade disc of the upper blade disc assembly and the lower blade disc of the lower blade disc assembly. A plurality of interruption areas are provided on the thread structure on one side of the adjusting component and/or the upper blade disc assembly. The interruption areas are connected to the upper and lower external sides of the thread structure, forming cleaning channels. The above structure allows the user, by operating the adjusting component, to easily and precisely adjust the distance between the upper and lower blade discs even without the direct action of a spring, thereby achieving adjustment of the grinding coarseness and greatly improving user convenience. Furthermore, as the internal and external screw threads rotate relative to each other, the screw threads scrape the powder and impurities inside the thread structure to the position of the interruption areas, which then fall out of the thread structure through the cleaning channels, preventing further accumulation and clogging.

### BRIEF DESCRIPTION OF DRAWINGS

To describe the technical solutions in the embodiments of the present disclosure or in the prior art more clearly, the following briefly introduces the accompanying drawings required for describing the embodiments or the prior art. Obviously, the accompanying drawings in the following description show only some embodiments of the present disclosure, and a person of ordinary skill in the art may still derive other drawings from these accompanying drawings without creative efforts.
FIG. 1 is a perspective view of a blade adjusting device for a bean grinder according to Embodiment 1 of the present disclosure;
FIG. 2 is a cross-sectional view of a blade adjusting device for a bean grinder according to Embodiment 1 of the present disclosure;
FIG. 3 is an exploded view of a blade adjusting device for a bean grinder according to Embodiment 1 of the present disclosure;
FIG. 4 is a perspective view of a bean grinding support according to Embodiment 1 of the present disclosure;
FIG. 5 is a perspective view of an adjusting disc according to Embodiment 1 of the present disclosure.

### Reference signs:

1-Bean grinding support; 11-Lug; 2-Lower retaining support; 3-Lower blade disc; 4-Adjusting disc; 41-Extemal thread; 42-Groove; 5-Upper retaining support; 6-Upper blade disc; 7-Adjusting component; 8-Retaining base; 9-Handle; 10-Pressing block.

### DESCRIPTION OF EMBODIMENTS

The technical solutions of the present disclosure will be further described below in conjunction with the accompanying drawings and through specific embodiments.

### Embodiment 1

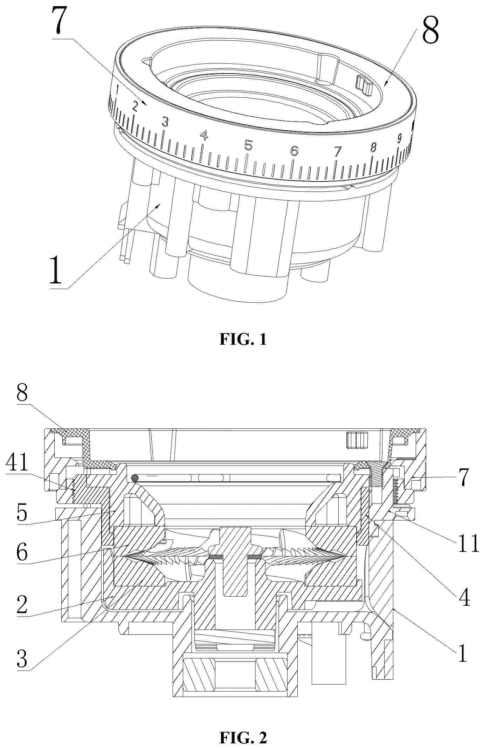

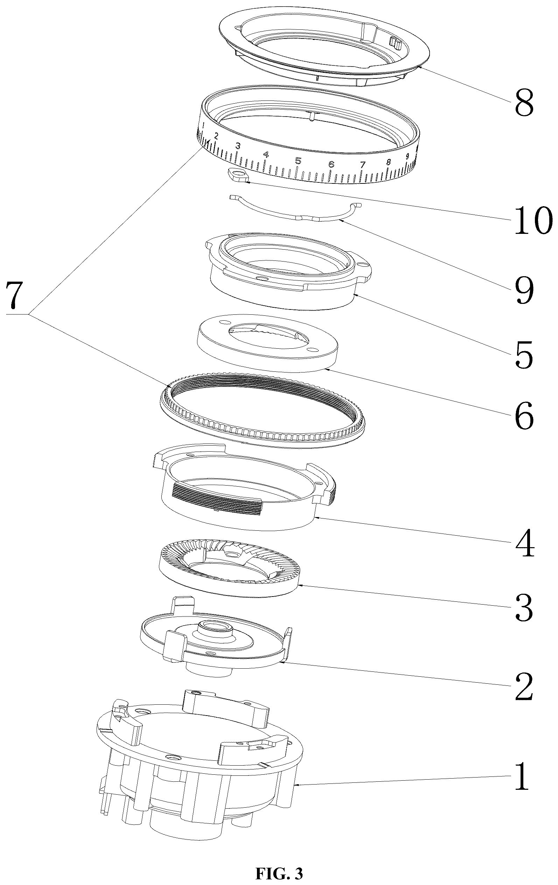

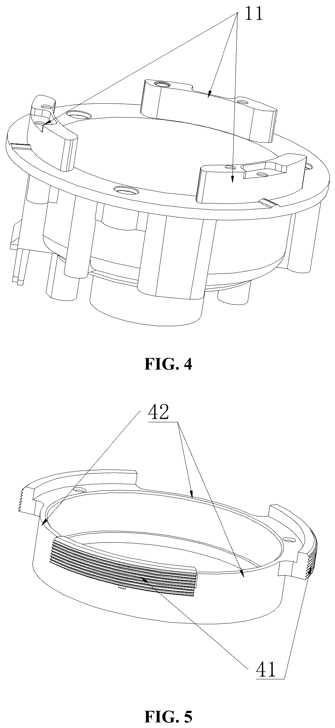

This embodiment provides a blade adjusting device for a bean grinder, as shown in FIGS. 1-5, including a bean grinding support 1, inside which a lower blade disc assembly and an upper blade disc assembly adapted to the lower blade disc assembly are installed, and further including an adjusting component 7. The adjusting component 7 and the upper blade disc assembly are in threaded connection fit. The adjusting component 7 is rotatable to drive the upper blade disc assembly to move axially, thereby adjusting the distance between the upper blade disc 6 of the upper blade disc assembly and the lower blade disc 3 of the lower blade disc assembly. On the thread structure on the side of the adjusting component 7 and/or the upper blade disc assembly at the threaded connection fit, a plurality of interruption areas are provided. The interruption areas are connected to the external upper and lower sides of the thread structure, forming cleaning channels. When rotating the adjusting component 7 to axially move the upper blade disc assembly, as the internal and external screw threads rotate relative to each other, the screw threads scrape the powder and impurities inside the thread structure to the interruption areas, which then fall out of the thread structure through the cleaning channels. The technical solution of this embodiment, through a series of unique structural innovations, cleverly addresses key issues in the production process, user adjustment experience, and cleaning maintenance of bean grinders. The entire solution does not include a spring adjustment mechanism, thereby preventing uneven force distribution due to spring elasticity degradation during subsequent use, which could affect the uniformity of ground coffee powder. Specifically, first, addressing the difficulty in rotating during adjustment of grind size in traditional bean grinders caused by spring force, this solution eliminates the original spring component through the precise design of the cooperation between the upper blade disc assembly and the adjusting component. It uses internal and external threads to rotate to the finest setting as a benchmark, achieving a smoother adjustment experience-adjusting from fine to coarse, which is convenient, easy to operate, and simpler. This design allows users to easily and precisely adjust the distance between the upper and lower blade discs by operating the adjusting component, even without direct spring action, thereby enabling adjustment of grind size and greatly enhancing user convenience. Second, addressing the issue where dust or impurities easily fall into the rotating screw threads during blade cleaning, leading to jamming, this solution incorporates interruption areas-a locally interrupted thread design. This not only reduces friction during rotation, making the adjustment process smoother, but also avoids screw thread jamming caused by prolonged use or improper operation, significantly improving the ease of use and durability of the bean grinder, and achieving a self-cleaning function. During cleaning, as the internal and external screw threads rotate relative to each other, the screw threads scrape the powder and impurities inside the thread structure to the interruption areas, which then fall out of the thread structure through the cleaning channels, preventing further accumulation and clogging. This design ensures the cleanliness and smoothness inside the screw threads, avoids machine failures due to impurity blockages, and guarantees long-term stable operation and easy maintenance of the bean grinder. Additionally, addressing the issue of large amounts of residual powder caused by the need for bean grinding tests during production to confirm grinding quality, this solution adopts an assembly limiting strategy, directly assembling to the finest grind setting based on the planes of the upper and lower blade discs. This design eliminates the need for bean grinding tests on each machine during assembly on the production line compared to the previous spring-supported structure, fundamentally avoiding residual coffee powder inside the entire machine. This simplifies the production process and significantly optimizes the user's unboxing experience.

Specifically, a plurality of lugs 11 are provided on the bean grinding support 1 or the lower blade disc assembly, and the outer edge of the upper blade disc assembly is provided with an external thread 41. The outer edge of the upper blade disc assembly is also provided with grooves 42 that match the lugs 11 and interrupt the external thread 41. The adjusting component 7 is threadedly connected to the external thread 41 of the upper blade disc assembly. The adjusting component 7 is operable to drive the upper blade disc assembly to move axially, thereby adjusting the distance between the upper blade disc 6 of the upper blade disc assembly and the lower blade disc 3 of the lower blade disc assembly. By providing a plurality of lugs on the bean grinding support or the lower blade disc assembly and designing grooves on the outer edge of the upper blade disc assembly that match them and interrupt the external thread, this innovative design greatly enhances the positioning and stability between the upper blade disc assembly and the bean grinding support or the lower blade disc assembly. The tight fit between the lugs and grooves effectively prevents possible offset or wobble of the upper blade disc during adjustment, ensuring the precision and consistency of the grinding process, which is crucial for guaranteeing the quality of ground coffee beans.

In this embodiment, the lugs 11 are centrally symmetrically distributed on the bean grinding support 1, and the grooves 42 matching the lugs 11 are also centrally symmetrically distributed, with the number of lugs set to three. This technical solution serves as a further preferred option because it effectively enhances the stability and precision of the blade adjusting device. The centrally symmetric distribution of lugs and grooves ensures a more accurate installation position of the upper blade disc assembly within the bean grinding support, avoiding uneven grinding caused by installation deviations. Additionally, the centrally symmetric structure helps distribute forces, making the force on the upper blade disc assembly more uniform during grinding, reducing wear and vibration due to uneven force distribution, thereby extending the equipment's service life. Furthermore, the lugs 11 are arc-shaped. Arc-shaped lugs can better cooperate with the grooves, reducing friction and resistance during assembly, making the installation and removal of the upper blade disc assembly smoother. Moreover, arc-shaped lugs also help provide a smoother transition when adjusting the grinding coarseness, avoiding uneven grinding or equipment damage due to abrupt changes during adjustment. This design not only improves the reliability and durability of the equipment but also allows users to experience a smoother and more comfortable operation when adjusting.

Preferably, the upper blade disc assembly includes an adjusting disc 4, an upper retaining support 5, and an upper blade disc 6. An external thread 41 is provided on the outer edge of the adjusting disc 4. The upper retaining support 5 is installed within the bean grinding support 1. The upper blade disc 6 is fixedly connected to the upper retaining support 5, and the upper retaining support 5 is fixedly connected to the adjusting disc 4. By arranging the external thread on the outer edge of the adjusting disc, users can more conveniently adjust the distance between the upper blade disc and the lower blade disc by rotating the adjusting disc, thereby achieving precise control over the grinding coarseness. Simultaneously, the fixed connection design between the upper retaining support and the upper blade disc ensures the stability of the upper blade disc during the grinding process, avoiding uneven grinding caused by vibration or wear. Furthermore, this design facilitates the disassembly and cleaning of the upper blade disc assembly when needed, enhancing the maintainability and service life of the device. Further, the lower blade disc assembly includes a lower retaining support 2 and a lower blade disc 3. The lower retaining support 2 is installed within the bean grinding support 1, and the lower blade disc 3 is fixedly connected to the lower retaining support 2, making it convenient for users to disassemble and clean the entire lower blade disc assembly when needed, thereby improving the maintainability and service life of the device.

Preferably, it also includes a retaining base 8, which is engaged with the upper blade disc assembly. The engaged connection design between the retaining base and the upper blade disc assembly ensures accurate positioning of the upper blade disc during the grinding process, avoiding uneven grinding caused by positional deviation. Additionally, the design of the retaining base helps distribute the forces on the upper blade disc during grinding, reducing wear and vibration due to uneven force distribution, thereby extending the service life of the device.

Preferably, a handle 9 is also provided, installed on the upper blade disc assembly. The design of the handle allows users to more easily rotate open the upper blade disc assembly when maintaining and cleaning the blade adjusting device, reducing operational difficulty and improving the operational convenience of the device.

Preferably, the pitch width of the external thread 41 is 1 .3- 1 .6mm, and the thread height is 8-12mm. In this embodiment, a pitch width of 1.5mm and a thread height of 10mm are adopted. By reasonably setting the pitch width and thread height, the adjusting disc can more precisely control the distance between the upper blade disc and the lower blade disc during rotation, thereby achieving precise control over the grinding coarseness. Meanwhile, this precise setting also helps reduce uneven grinding caused by errors during the adjustment process. Furthermore, the reasonable design of pitch width and thread height can enhance the durability and wear resistance of the adjusting disc, extending the service life of the device.

Preferably, the outer side of the adjusting component 7 is provided with a scale for indicating the coarseness of ground coffee beans. Specifically, the adjusting component 7 includes a dial and an adjusting shaft; the scale is set on the dial, and the dial and adjusting shaft are connected in a toothed engagement manner. By setting scale markings on the adjusting component, users can more intuitively understand the current grinding coarseness setting, avoiding uneven grinding due to uncertainty during adjustment. Additionally, the presence of scale markings allows users to more accurately control the adjustment range and precision when adjusting grinding coarseness, thereby improving the adjustment efficiency and stability of the device. This design not only enhances the usability of the device but also improves the user's operational experience and satisfaction.

Preferably, it also includes a pressing block 10. The pressing block 10 is installed on the bean grinding support 1, located above the adjusting component 7, and serves to limit the adjusting component 7 to prevent over-adjustment.

### Embodiment 2

This embodiment provides a bean grinder, which includes the blade adjusting device as described in Embodiment 1. This bean grinder also offers the advantages of convenient rotational adjustment and screw threads that are less prone to jamming.

The present disclosure is described through preferred embodiments. Those skilled in the art understand that various changes or equivalent substitutions can be made to these features and embodiments without departing from the spirit and scope of the present disclosure. The present disclosure is not limited by the specific embodiments disclosed herein, and other embodiments falling within the scope of the claims of this application are all protected by the present disclosure.

## Claims

1. A blade adjusting device for a bean grinder, **characterized in that**, comprising:
a bean grinding support (1), wherein a lower blade disc assembly and an upper blade disc assembly adapted to the lower blade disc assembly are installed inside the bean grinding support (1);
an adjusting component (7), wherein the adjusting component (7) forms a threaded connection fit with the upper blade disc assembly, and the adjusting component (7) is rotatable to drive the upper blade disc assembly to move axially, thereby adjusting a distance between an upper blade disc (6) of the upper blade disc assembly and a lower blade disc (3) of the lower blade disc assembly;
wherein a plurality of interruption areas are provided on a thread structure on a side of the upper blade disc assembly at the threaded connection fit, the interruption areas are connected to external upper and lower sides of the thread structure, forming cleaning channels, and when the adjusting component (7) is rotated to axially move the upper blade disc assembly, a relative rotation of internal and external screw threads within the thread structure causes powder and impurities inside the thread structure to be scrape by the screw threads to a location of the interruption areas and then fall out of the thread structure through the cleaning channels.

2. The blade adjusting device according to claim 1, **characterized in that**:
a plurality of lugs (11) are provided on the bean grinding support (1), an external thread (41) is formed at an outer edge of the upper blade disc assembly, and grooves (42) adapted to the lugs (11) are further formed at the outer edge of the upper blade disc assembly to interrupt the external thread (41); and
the adjusting component (7) is threadedly connected to the external thread (41) of the upper blade disc assembly, and the adjusting component (7) is operable to drive the upper blade disc assembly to move axially, thereby adjusting the distance between the upper blade disc (6) of the upper blade disc assembly and the lower blade disc (3) of the lower blade disc assembly.

3. The blade adjusting device according to claim 2, **characterized in that** the lugs (11) are centrally symmetrically distributed on the bean grinding support (1), and the grooves (42) adapted to the lugs (11) are correspondingly centrally symmetrically distributed.

4. The blade adjusting device according to claim 3, **characterized in that** the lugs (11) are arc-shaped.

5. The blade adjusting device according to claim 2, **characterized in that**:
the upper blade disc assembly comprises an adjusting disc (4), an upper retaining support (5), and an upper blade disc (6); and
the external thread (41) is formed at an outer edge of the adjusting disc (4), the upper retaining support (5) is installed within the bean grinding support (1), the upper blade disc (6) is fixedly connected to the upper retaining support (5), and the upper retaining support (5) is fixedly connected to the adjusting disc (4).

6. The blade adjusting device according to claim 1, **characterized in that**:
the lower blade disc assembly comprises a lower retaining support (2) and a lower blade disc (3); and
the lower retaining support (2) is installed within the bean grinding support (1), and the lower blade disc (3) is fixedly connected to the lower retaining support (2).

7. The blade adjusting device according to claim 1, **characterized in that**, further comprising:
a retaining base (8) that is engaged with the upper blade disc assembly.

8. The blade adjusting device according to claim 1, **characterized in that**, further comprising:
a handle (9) installed on the upper blade disc assembly.

9. The blade adjusting device according to claim 1, **characterized in that** a scale for indicating a coarseness of ground beans is provided on an exterior of the adjusting component (7).

10. A bean grinder, **characterized in that**, comprising:
the blade adjusting device according to any one of claims 1-9.
